(19) Europäisches Patentamt
European Patent Office
Office européen des brevets

(11) **EP 1 113 258 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(51) Int Cl.:
***G01N 9/26*** *(2006.01)*

(21) Anmeldenummer: **00128403.3**

(22) Anmeldetag: **27.12.2000**

(54) **Messeinrichtung zum Messen der Dichte einer Flüssigkeit mit einem Differenzdrucksensor**

Measuring device for measuring the density of a fluid using a differential pressure sensor

Dispositif de mesure de la densité d'un fluide avec un capteur de pression différentielle

(84) Benannte Vertragsstaaten:
**AT CH DE ES FR IT LI**

(30) Priorität: **31.12.1999 DE 19963935**

(43) Veröffentlichungstag der Anmeldung:
**04.07.2001 Patentblatt 2001/27**

(73) Patentinhaber: **LiquosystemS GmbH**
**74366 Kirchheim (DE)**

(72) Erfinder:
• **Grohmann, Rainer**
**71640 Ludwigsburg (DE)**
• **Grossmann, Matthias**
**71665 Vaihingen (DE)**

(74) Vertreter: **Dreiss, Fuhlendorf, Steimle & Becker**
**Patentanwälte**
**Postfach 10 37 62**
**70032 Stuttgart (DE)**

(56) Entgegenhaltungen:
DE-A- 4 317 067           DE-U- 9 300 776
FR-A- 1 187 788           GB-A- 846 265
GB-A- 1 179 566

• **SCHOEDEL W: "ZUR NULLPUNKT-STABILITAET PNEUMATISCHER DIFFERENZDRUCK-UMFORMER" ARCHIV FÜR TECHNISCHE MESSEN UND INDUSTRIELLE MESSTECHNIK, Februar 1962 (1962-02), Seiten R13-R16, XP008020522**

**Beschreibung**

Die vorliegende Erfindung betrifft einen Differenzdrucksensor zum Messen einer Druckdifferenz in einer Messflüssigkeit. Der Differenzdrucksensor weist ein in etwa rohrförmiges Gehäuse und zwei darin angeordnete, aneinandergrenzende Messkammern auf. Die beiden Messkammern stehen jeweils über einen Druckaufnahmebereich des Differenzdrucksensors mit der Messflüssigkeit in Verbindung. Sie sind jeweils nach außen durch eine zumindest teilweise flexible Wandung begrenzt und durch eine bewegbare Druckplatte voneinander getrennt. Der Differenzdrucksensor weist Mittel zum Erfassen der Auslenkung der Druckplatte auf. Zwischen der Wandung des Gehäuses und der Wandung der Meßkammern ist eine Kompensationskammer ausgebildet.

Die Erfindung betrifft außerdem eine Messeinrichtung zum Messen der Dichte einer Messflüssigkeit, mit einem Differenzdrucksensor und einer mit diesem verbundenen Auswerteelektronik.

Eine derartige Messeinrichtung ist bspw. aus der DE 43 17 067 A1 bekannt. Der Differenzdrucksensor wird mindestens so weit in der Messflüssigkeit versenkt, dass die Druckaufnahmebereiche von der Messflüssigkeit vollständig bedeckt sind. Vorzugsweise wird der Differenzdrucksensor derart in der Messflüssigkeit angeordnet, dass die Sensorlängsachse senkrecht zu der Oberfläche der Messflüssigkeit verläuft. Dann sind die Druckaufnahmebereiche in unterschiedlichen Höhen in der Messflüssigkeit angeordnet. Aufgrund des Gewichts der Messflüssigkeit herrscht an dem unteren Druckaufnahmebereich ein höherer Druck als an dem oberen Druckaufnahmebereich. Die Drücke an den Druckaufnahmebereichen werden in die Messkammern übertragen, wobei die Differenz der Drücke in den Messkammern zu einer Auslenkung der Druckplatte parallel zu der Sensorlängsachse führt. Aus der Auslenkung der Druckplatte wird die entsprechende Druckdifferenz und die entsprechende Dichte der Messflüssigkeit ermittelt.

Aus der Dichte der Messflüssigkeit kann dann bspw. die Konzentration einer Säure in Baumé-Graden oder das Mostgewicht eines Mostes oder Weines in Oechsle-Graden bestimmt werden. Das Mostgewicht ist weitgehend abhängig von dem Zuckergehalt des Mostes oder Weines, so dass das Mostgewicht zur überschlägigen Berechnung des Zuckergehaltes herangezogen werden kann. Das Mostgewicht in Oechsle kann nach folgender Gleichung bestimmt werden:

$$\text{Mostgewicht } [°Oe] = (\text{Dichte } 20/20 - 1) \cdot 1000 \ [°Oe],$$

wobei das Gewichtsverhältnis

$$\text{Dichte } 20/20 = \frac{\text{Dichte\_Most bei } 20°C}{\text{Dichte\_H2O bei } 20°C}.$$

Während des Gärvorgangs eines Mostes verringert sich dessen Dichte, da Zucker in Alkohol, Kohlendioxid und Säuren umgewandelt wird. Somit kann die Dichte einer gärenden Messflüssigkeit (z. B. Most oder Wein) einen zuverlässigen Hinweis auf den Zustand der Gärung geben. Es ist denkbar, das Ergebnis der Dichtemessung in einer Regelung des Gärvorgangs einzubeziehen. Durch Anheben oder Senken der Temperatur einer gärenden Messflüssigkeit kann die Gäraktivität angeregt bzw. gehemmt werden, um so durch den Gärprozess einen definierten Abbau der Dichte pro Zeit (sog. Dichtezehrung) zu erzielen. Dadurch kann die Gesamtgärdauer vorhergesagt und ein vorgegebener Gärverlauf eingehalten werden.

Auf diese Weise kann eine Zeitersparnis bei der Vergärung erzielt werden. Außerdem kann durch eine gezielte Beeinflussung der Dichtezehrung die Qualität der gärenden Messflüssigkeit beeinflusst werden. Des Weiteren kann ein dichteabhängiges Temperaturprofil des Gärprozesses definiert werden, das von einer Mess- und Regeleinrichtung entsprechend den Ergebnissen der Dichtemessung umgesetzt wird. Dadurch kann eine Prozessoptimierung des Gärprozesses, eine Erhöhung der Prozesssicherheit und eine Qualitätssteigerung der gärenden Messflüssigkeit erzielt werden.

Bei dem Differenzdrucksensor der bekannten Messeinrichtung führt eine Auslenkung der Druckplatte und eine damit zwangsläufig verbundene Bewegung der flexiblen Wandungen der Messkammern zu einer Änderung des Volumens der Kompensationskammer. Die Kompensationskammer ist üblicherweise mit Luft gefüllt. Da die Kompensationskammer keinerlei Druckausgleichsöffnungen aufweist, kann es in der Kompensationskammer zu einem Unter- bzw. zu einem Überdruck kommen, der eine freie Auslenkung der Druckplatte in Abhängigkeit der in den Druckkammern herrschenden Druckdifferenz behindert und so zu einer Verfälschung des Messergebnisses des Differenzdrucksensors führt.

Aus der GB-A-1 179 566 ist ein Differenzdrucksensor mit einer Kompensationskammer, die etwa mittig zwischen zwei Druckaufnahmebereichen mit der Messflüssigkeit in Verbindung steht, bekannt.

Aus der FR-A-1 187 788 ist ein Differenzdrucksensor mit einer Kompensationskammer in der ein Vakuum ausgebildet ist, bekannt.

Aus der DE 43 17 067 A ist ein Differenzdrucksensor mit Messkammern, die jeweils über einen mit einer Druckmittlerflüssigkeit gefüllten Druckübertragungsbereich mit einem der Druckaufnahmebereiche in Verbindung stehen, bekannt.

Aus der DE 93 00 776 U1 ist ein Differenzdrucksensor der oben beschriebenen Art bekannt, dessen Kompensationskammer zwar eine nicht näher bezeichnete und nicht näher beschriebene Druckausgleichsöffnung aufweist. Diese Druckausgleichsöffnung ist jedoch neben dem Druckaufnahmebereich einer ersten Messkammer an einer Stirnseite des Gehäuses des Differenzdrucksensors angeordnet. In der Kompensationskammer herrscht somit stets der gleiche Druck wie in der ersten Messkammer. Der in dieser Messkammer herrschende Druck wirkt also nicht nur über die Druckplatte, sondern auch von außen über die Kompensationskammer auf die zweite Messkammer. Bei diesem bekannten Differenzdrucksensor kann sich die Druckplatte also nicht genau proportional zu der in den Messkammern herrschenden Druckdifferenz bewegen, was ebenfalls zu einer Verfälschung des Messergebnisses des Differenzdrucksensors führt.

Ein weiteres Problem der aus der DE 43 17 067 A1 und der DE 93 00 776 Ul bekannten Differenzdrucksensoren besteht außerdem darin, dass die flexiblen Wandungen der Messkammern als im Wesentlichen rohrförmige Faltenbalge ausgebildet sind. Ein erstes Ende an einer Stirnseite der Faltenbalge ist an einem Deckel des Gehäuses des Differenzdrucksensors befestigt. Das zweite Ende an der gegenüberliegenden Stirnseite der Faltenbalge ist an der Druckplatte befestigt. Eine Druckdifferenz in den Messkammern des Differenzdrucksensors führt, wie bereits oben beschrieben, zu einer Auslenkung der Druckplatte im Wesentlichen parallel zu der Sensorlängsachse und zu einem Ausdehnen des einen Faltenbalges und zu einem Zusammendrücken des anderen Faltenbalges. Während der Auslenkung der Druckplatte kann es in den Faltenbalgen zu einer Umkehr von Druckspannung auf Zugspannung oder umgekehrt kommen. Aufgrund der Spannungsumkehr ergeben sich für die Messgenauigkeit des Differenzdrucksensors nachteilige Nichtlinearitäten.

Der vorliegenden Erfindung liegt die Aufgabe zugrunde, einen Differenzdrucksensor der eingangs genannten Art dahingehend auszugestalten und weiterzubilden, dass die Messgenauigkeit und die Zuverlässigkeit der Messungen erhöht wird.

Zur Lösung dieser Aufgabe schlägt die Erfindung ausgehend von dem Differenzdrucksensor der eingangs genannten Art vor, dass die Kompensationskammer des Differenzdrucksensors in etwa mittig zwischen den beiden Druckaufnahmebereichen über einen Druckausgleichsbereich mit der Messflüssigkeit in Verbindung steht und, dass die Messkammern jeweils über einen mit einer Druckmittlerflüssigkeit gefüllten Druckübertragungsbereich mit einem der Druckaufnahmebereichen in Verbindung stehen.

Gemäß der erfindungsgemäßen Messeinrichtung stellt sich in der Kompensationskammer also ein Druck ein, der zwischen den Drücken an den beiden Druckaufnahmebereichen bzw. in den beiden Messkammern des Differenzdrucksensors liegt. Die Druckdifferenz zwischen dem Druck in der Kompensationskammer und dem Druck in den Messkammern wirkt druckerhöhend auf die Messkammer, in der der niedrigere Druck herrscht, und druckvermindernd auf die Messkammer, in der der höherere Druck herrscht. Anders ausgedrückt, wird die Auslenkung der Druckplatte aufgrund des in der Kompensationskammer herrschenden Druckes von Seiten der einen Messkammer in demselben Maße behindert, wie sie von Seiten der anderen Messkammer gefördert wird. Die Auswirkungen des in der Kompensationskammer herrschenden Drucks auf die Auslenkung der Druckplatte werden also aufgrund des symmetrischen Aufbaus des Differenzdrucksensors, insbesondere aufgrund der Symmetrie der Messkammern, nahezu vollständig kompensiert. Der in der Kompensationskammer herrschende Druck hat nahezu keinen Einfluss auf das Messergebnis des Differenzdrucksensors. Volumenänderungen in den Messkammern aufgrund einer Auslenkung der Druckplatte können zu Druckänderungen in der Kompensationskammer führen, die über den Druckausgleichsbereich abgebaut werden. Mit dem erfindungsgemäßen Differenzdrucksensor kann eine Druckdifferenz in einer Messflüssigkeit somit mit einer besonders hohen Genauigkeit gemessen werden.

Die hohe Genauigkeit der Messergebnisse des erfindungsgemäßen Differenzdrucksensors ist insbesondere dann von Bedeutung, wenn das Messergebnis in eine Regelung eines Gärprozesses einfließt. Durch die erhöhte Genauigkeit der Messung kann die Regelung nämlich hinsichtlich einer möglichst geringen Schwingneigung, d. h. einer mögichst geringen dynamischen Regeldifferenz, und kurzer Einschwingzeiten optimiert werden.

Gemäß einer alternativen Lösung der Aufgabe wird ausgehend von dem Differenzdrucksensor der eingangs genannten Art vorgeschlagen, dass in der Kompensationskammer des Differenzdrucksensors ein Vakuum ausgebildet ist. Das Vakuum liegt vorzugsweise unter 1 mbar. Der in der Kompensationskammer herrschende Druck ist im Vergleich zu dem im Bereich der Druckaufnahmebereiche bzw. in den Messkammern herrschenden Drücken sehr klein. Der in der Kompensationskammer herrschende Druck wirkt sich also nahezu identisch auf die Drücke in den beiden Messkammern aus. Aufgrund des symmetrischen Aufbaus des erfindungsgemäßen Differenzdrucksensors, insbesondere aufgrund der Symmetrie der Messkammern, werden die Auswirkungen des in der Kompensationskammer herrschenden Drucks auf das Messergebnis des Differenzdrucksensors also nahezu vollständig kompensiert.

Gemäß einer vorteilhaften Weiterbildung der vorliegenden Erfindung wird vorgeschlagen, dass die flexiblen Wandungen der Messkammern als im Wesentlichen rohrförmige Faltenbalge ausgebildet sind, deren erstes Ende jeweils an einem Deckel des Gehäuses des Differenzdrucksensors und deren zweites Ende an der Druckplatte befestigt ist, wobei die Faltenbalge unter Vorspannung montiert sind, so dass sie in jeder Position der Druckplatte unter Druckspannung stehen. Das hat den Vorteil, dass es während der Auslenkung der Druckplatte nicht zu einer Spannungsumkehr von Druck- auf Zugspannung oder umgekehrt kommt. Dadurch werden Nichtlinearitäten beim Übergang des Faltenbalges von Druckspannung auf Zugspannung vermieden und die Genauigkeit der Messung erhöht.

Auch dieser Differenzdrucksensor mit den unter Vorspannung montierten Faltenbalgen hat vorzugsweise einen mittig zwischen den beiden Druckaufnahmebereichen angeordneten Druckausgleichsbereich bzw. weist ein Vakuum in der Kompensationskammer auf.

Gemäß einer bevorzugten Ausführungsform der vorliegenden Erfindung wird vorgeschlagen, dass in den Druckaufnahmebereichen jeweils mindestens eine flexible Membran ausgebildet ist, die die Druckmittlerflüssigkeit von der Messflüssigkeit trennt. Die Druckmittlerflüssigkeit füllt die Übertragungsbereiche von den Membranen bis zu den Messkammern ohne Lufteinschluss vollständig aus, da die übertragenen Drücke sonst verfälscht werden. Die Übertragungsbereiche können bspw. als nicht drucknachgiebige Übertragungsleitungen ausgebildet sein, die von den Druckaufnahmebereichen zu den Messkammern verlaufen. Die Druckmittlerflüssigkeit weist vorzugsweise eine ähnliche oder dieselbe Zusammensetzung wie die Messflüssigkeit auf, um auf die Messflüssigkeit wirkende Störgrößen (z.B. eine variierende Umgebungstemperatur, ein variierender Umgebungsdruck) nach Möglichkeit vollständig kompensieren zu können. Wenn die Messflüssigkeit bspw. eine wässrige Lösung (z.B. Wein) ist, sollte die Druckmittlerflüssigkeit ebenfalls einen hohe Wasseranteil aufweisen. Bei öligen oder anderen Messflüssigkeiten sollte die Druckmittlerflüssigkeit eine ebensolche Zusammensetzung aufweisen.

Gemäß einer anderen bevorzugten Ausführungsform der vorliegenden Erfindung wird vorgeschlagen, dass in dem Druckausgleichsbereich mindestens eine flexible Membran ausgebildet ist, die den Inhalt der Kompensationskammer von der Messflüssigkeit trennt.

Die Membranen sind vorteilhafter Weise zumindest auf der der Messflüssigkeit zugewandten Membranfläche mit Fluorpolymer, vorzugsweise mit Polytetrafluoräthylen, beschichtet. Alternativ wird vorgeschlagen, das die Membranen aus Fluorelastomeren hergestellt sind. Dadurch wird die Säurebeständigkeit der Membranen und somit deren Lebensdauer erhöht. Diffusionsneigungen von bspw.

Kohlendioxid aus der Messflüssigkeit durch die Membranen hindurch in die Druckmittlerflüssigkeit und somit eine Veränderung der Zusammensetzung der Druckmittlerflüssigkeit über die Einsatzdauer des Differenzdrucksensors werden verringert. Die Druckmittlerflüssigkeit behält im Wesentlichen über die gesamte Einsatzdauer die ursprünglich vorgesehene Zusammensetzung und es kommt zu keiner Verschlechterung der Genauigkeit der Messergebnisse über die Einsatzdauer der Messeinrichtung.

Eine Anreicherung von bspw. Kohlendioxid aus der Messflüssigkeit in der Druckmittlerflüssigkeit kann gemäß einer weiteren bevorzugten Ausführungsform der vorliegenden Erfindung auch dadurch besonders wirkungsvoll verhindert werden, dass in den Druckaufnahmebereichen bzw. in dem Druckausgleichsbereich jeweils zwei flexible Membrane hintereinander angeordnet sind, die eine mit einer Barriereflüssigkeit gefüllte Barrierekammer begrenzen. Die Barriereflüssigkeit kann dahingehend optimiert werden, dass eine Anreicherung von bspw. Kohlensäure-Ionen aus der Messflüssigkeit in der Druckmittlerflüssigkeit wirksam verhindert wird.

Die Druckmittlerflüssigkeit und/oder die Barriereflüssigkeit weist vorteilhafter Weise ein basisches Verhalten auf. Dies verhindert die Ausgasung von gebundenem Kohlendioxid.

Schließlich wird gemäß einer weiteren bevorzugten Ausführungsform der Erfindung vorgeschlagen, dass die Druckmittlerflüssigkeit und/oder die Barriereflüssigkeit ein Gemisch aus Wasser und Kaliumhydroxid oder aus Wasser und Natriumhydroxid umfasst, mit einem Anteil an Kaliumhydroxid bzw. an Natriumhydroxid von mindestens 0,1 mol/liter.

Die Erfindung betrifft auch eine Messeinrichtung der eingangs genannten Art. Zur Verbesserung der Messgenauigkeit der Messeinrichtung wird vorgeschlagen, dass der Differenzdrucksensor nach einem der Ansprüche 1 bis 11 ausgebildet ist und Mittel zum Übermitteln der Auslenkung der Druckplatte an die Auswerteelektronik aufweist, die aus der Auslenkung der Druckplatte die entsprechende Dichte der Messflüssigkeit ermittelt. Die Auswerteelektronik kann entweder außerhalb der Messeinrichtung angeordnet oder in diese integriert sein.

Gemäß einer anderen vorteilhaften Weiterbildung der vorliegenden Erfindung wird vorgeschlagen, dass der Differenzdrucksensor Mittel zum Erfassen der Temperatur der Messflüssigeit und Mittel zum Übermitteln der Temperatur an die Auswerteelektronik aufweist, wo die Temperatur bei der Ermittlung der Dichte der Messflüssigkeit Berücksichtigung findet. Gemäß dieser Weiterbildung der vorliegenden Erfindung kann die absolute Temperatur der Messflüssigkeit in die Ermittlung der Dichte einbezogen werden. Dadurch kann die Genauigkeit der Ergebnisse der Dichtemessung weiter erhöht werden.

Ein bevorzugte Ausführungsform der erfindungsgemäßen Messeinrichtung wird im Folgenden anhand der Zeichnungen näher erläutert. Es zeigen:

Figur 1    eine erfindungsgemäße Messeinrichtung gemäß einer bevorzugten Ausführungsform; und

Figur 2    einen erfindungsgemäßen Differenzdrucksensor der Messeinrichtung aus Figur 1 im Ausschnitt.

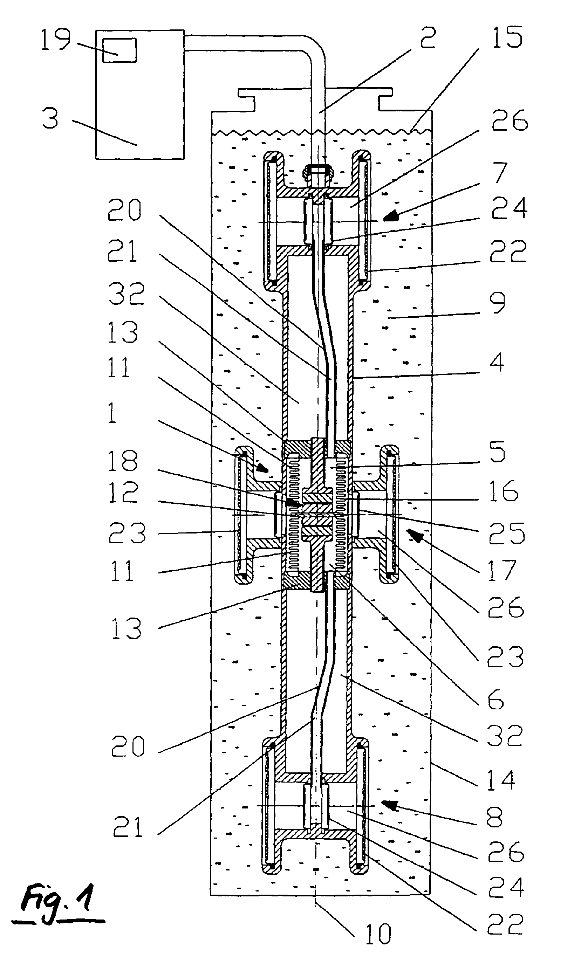

In Figur 1 ist eine erfindungsgemäße Messeinrichtung zum Messen der Dichte einer Messflüssigkeit 9 dargestellt. Die Messflüssigkeit 9 ist bspw. ein gärender Most oder Wein. Die Messeinrichtung weist einen Differenzdrucksensor 1 und eine mit dem Differenzdrucksensor 1 über ein Kabel 2 verbundene Auswerteelektronik 3 auf. Alternativ kann die Auswerteelektronik 3 auch in den Differnzdrucksensor 1 integriert sein. Der Differenzdrucksensor 1 weist ein in etwa rohrförmiges Gehäuse 4 auf. In dem Gehäuse 4 sind zwei symmetrische Messkammern 5, 6 ausgebildet, die jeweils über einen Druckaufnahmebereich 7, 8 mit der Messflüssigkeit 9 in Verbindung stehen. Das Gehäuse 4 besteht aus einem gegenüber der Messflüssigkeit 9 beständigen Material, bspw. rostfreien Stahl oder Edelstahl.

Die Messkammern 5, 6 sind von der Sensorlängsachse 10 aus radial nach außen gesehen jeweils durch eine als Faltenbalg 11 ausgebildete flexible Wandung begrenzt. Die Faltenbalge 11 sind im Wesentlichen rohrförmig ausgebildet. Zu einer Stirnseite hin sind die Messkammern 5, 6 durch eine gemeinsame parallel zu der Sensorlängsachse 10 bewegbare Druckplatte 12 begrenzt. An den jeweils gegenüberliegenden Stirnseiten sind die Messkammern 5, 6 durch in dem Gehäuse 4 befestigte Deckel 13 begrenzt. Die ersten Enden der Faltenbalge 11 sind jeweils an einem Deckel 13 und die zweiten Enden jeweils an der Druckplatte 12 befestigt. Die Faltenbalge 11 bestehen aus rostfreiem Stahlblech. Sie sind unter Vorspannung montiert, so dass sie in jeder Position der Druckplatte 12 unter Druckspannung stehen.

Der Differenzdrucksensor 1 ist so weit in einen mit der Messflüssigkeit 9 gefüllten Gärbehälter 14 eingetaucht, dass die Druckaufnahmebereiche 7, 8 vollständig von der Messflüssigkeit 9 bedeckt sind. Außerdem ist der Differenzdrucksensor 1 derart in dem Gärbehälter 14 angeordnet, dass die Sensorlängsachse 10 senkrecht zu der Oberfläche 15 der Messflüssigkeit 9 verläuft.

Der Differenzdrucksensor 1 weist Mittel (nicht dargestellt) zum Erfassen der Temperatur der Messflüssigkeit 9 auf. Diese Mittel zum Erfassen der Temperatur sind bspw. als ein Temperaturwandler ausgebildet, der in Abhängigkeit der Temperatur der Messflüssigkeit 9 einen Strom erzeugt, der über das Kabel 2 an die Auswerteelektronik 3 übermittelt wird. In der Auswerteelektronik 3 wird die Temperatur der Messflüssigkeit 9 bei der Ermittlung der Dichte der Messflüssigkeit 9 berücksichtigt. Alternativ können auch andere Temperatursensoren, z. B. ein Widerstand mit einem negativen Temperaturkoeffezient (NTC-Widerstand), als Mittel zum Erfassen der Temperatur eingesetzt werden.

Zwischen der Wandung des Gehäuses 4 und den Faltenbalgen 11 ist eine Kompensationskammer 16 ausgebildet. Die Kompensationskammer 16 ist evakuiert. Alternativ kann sie auch mit einer Druckübertragungsflüssigkeit gefüllt sein. Die Kompensationskammer 16 ist zu beiden Stirnseiten hin durch die Deckel 13 des Gehäuses 4 begrenzt. In dem Gehäuse 4 ist in etwa mittig zwischen den beiden Druckaufnahmebereichen 7, 8 ein Druckausgleichsbereich 17 vorgesehen, über den die Kompensationskammer 16 mit der Messflüssigkeit 9 in Verbindung steht.

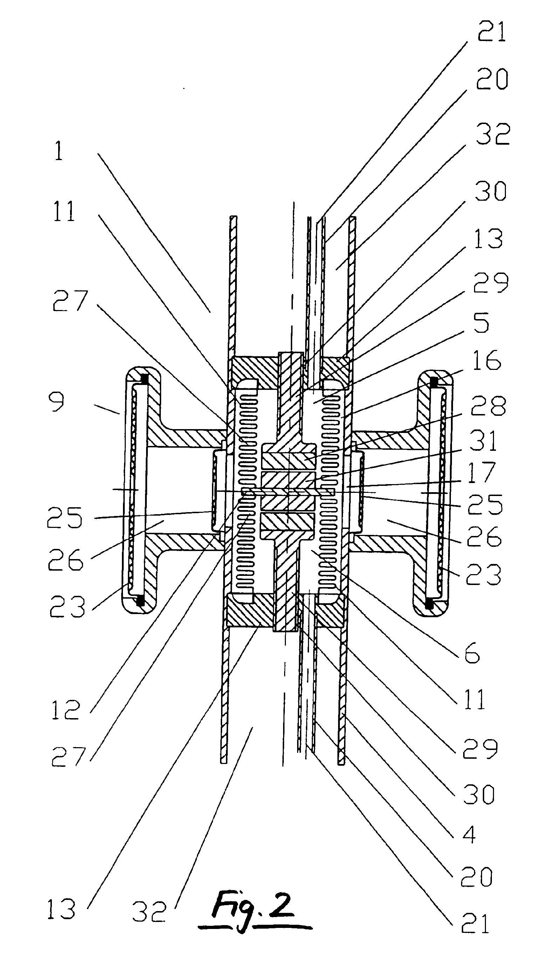

Der Differenzdrucksensor 1 weist Mittel 18 zum Erfassen der Auslenkung der Druckplatte 12 auf. In der dargestellten Ausführungsform arbeiten die Mittel 18 induktiv. Es ist jedoch auch denkbar, die Auslenkung der Druckplatte 12 kapazitiv oder durch Abstandsmessung mit Hilfe eines Laserstrahls zu ermitteln. Der Aufbau der Mittel 18 zum Erfassen der Auslenkung der Druckplatte 12 ist im Einzelnen in Figur 2 dargestellt (vgl. unten). Die Auslenkung der Druckplatte 12 wird durch die Mittel 18 in ein entsprechendes elektrisches Signal umgewandelt, das über das Anschlußkabel 2 an die Auswerteelektronik 3 übermittelt wird. Die Auswerteelektronik 3 ermittelt aus der Auslenkung der Druckplatte 12 die entsprechende in den Messkammern 5, 6 herrschende Druckdifferenz und daraus die Dichte der Messflüssigkeit 9. Aus der Dichte kann dann bspw. die Konzentration einer Säure in Baumé-Graden oder das Mostgewicht bzw. näherungsweise der Zuckergehalt eines Mostes oder Weines in Oechsle-Graden bestimmt werden. Eine dieser Größen wird auf einem Anzeigeelement 19 der Auswerteelektronik 3 angezeigt. Alternativ oder zusätzlich kann der ermittelte Wert auch an eine Mess- und Regelungseinrichtung weitergeleitet werden, mit deren Hilfe bspw. der Gärvorgang der Messflüssigkeit 9 geregelt werden kann.

Der Differenzdrucksensor 1 weist als nicht drucknachgiebige Übertragungsleitungen ausgebildete Übertragungsbereiche 20 auf, die mit einer Druckmittlerflüssigkeit 21 gefüllt sind. Mit Hilfe der Übertragungsbereiche 20 werden die in der Messflüssigkeit 9 im Bereich der Druckaufnahmebereiche 7, 8 herrschenden Drücke von den Druckaufnahmebereichen 7, 8 zu den Messkammern 5, 6 übertragen.

In den Druckaufnahmebereichen 7, 8 sind jeweils diametral gegenüberliegend zwei flexible Membranen 22, 24 hintereinander angeordnet. Ebenso sind in dem Druckausgleichsbereich 17 jeweils diametral gegenüberliegend zwei flexible Membranen 23, 25 hintereinander angeordnet. Jeweils zwei hintereinander angeordnete Membrane 22, 24 bzw. 23, 25 begrenzen eine Barrierekammer 26, die mit einer Barriereflüssigkeit gefüllt ist. Die in der Messflüssigkeit 9 herrschenden Drücke werden über die flexiblen Membranen 22, die Barriereflüssigkeit und die flexiblen Membranen 24 auf die Druckmittlerflüssigkeit 21 übertragen.

Die Membranen 22, 23, 24, 25 bestehen bspw. aus Silikon, aus einem Fluorokarbonelastomer oder aus einem Ethylenpropylendienmonomer (EPDM). Die flexiblen Membranen 22 sind auf der der Messflüssigkeit 9 zugewandten Membranfläche mit einem Fluorpolymer, insbesondere mit Polytetrafluoräthylen, beschichtet. Auch die der Messflüssigkeit 9 zugewandten Membranflächen der flexiblen Membrane 23 sind mit einem Fluorpolymer beschichtet.

Die Druckmittlerflüssigkeit 21 und/oder die Barriereflüssigkeit in den Barrierekammern 26 weist ein basisches/ alkalisches Verhalten auf, um dadurch die Ausgasung von gebundenem Kohlendioxid zu verhindern. Genauer gesagt weist die Druckmittlerflüssigkeit 21 und/oder die Barriereflüssigkeit einen hohen Anteil an Kationen und einen pH-Wert im basischen Bereich auf, um dadurch die aus der Messflüssigkeit 9 von außen eindiffundierende Kohlensäure zu binden. Es wird insbesondere vorgeschlagen, dass die Druckmittlerflüssigkeit 21 und/oder die Barriereflüssigkeit ein Gemisch aus Wasser ($H_2O$) und Kaliumhydroxid (KOH) oder aus Wasser ($H_2O$) und Natriumhydroxid (NaOH) umfasst, mit einem Anteil an Kaliumhydroxid bzw. an Natriumhydroxid von mindestens 0,1 mol/l.

In Figur 2 ist deutlich zu erkennen, dass die Membranen 22, 23, 24, 25 eine sich ringförmig um das Zentrum der Membranen 22, 23, 24, 25 erstreckende Membranwellung aufweisen. Durch die Membranwellung wird trotz der Fluorpolymer-Beschichtung der äußeren Membranfläche der Membranen 22, 23 eine hohe Elastizität der Membranen 22, 23 sichergestellt. Die Elastizität der Membranen 22, 23, 24, 25 sollte um ein Vielfaches größer als die Elastizität der Faltenbalge 11 sein, um die an den Druckaufnahmebereichen 7, 8 herrschenden Drücke der Messflüssigkeit 9 in voller Höhe in die Messkammern 5, 6 zu übertragen und eine ungehinderte Auslenkung der Druckplatte 12 ermöglichen zu können.

Die Mittel 18 zum Erfassen der Auslenkung der Druckplatte 12 weisen zwei identische elektromagnetische Wegwandler 27 auf (vgl. Figur 2). Die Wegwandler 27 umfassen jeweils eine Erregerspule 28, die an einer Trägerstange 29 befestigt ist. Die Trägerstangen 29 sind in einem Gewinde 30 parallel zu der Sensorlängsachse 10 in den Deckeln 30 des Gehäuses 4 gelagert. Auf beiden Seiten der Druckplatte 12 sind Polplatten 31 angeordnet, die den Erregerspulen 28 zugeordnet und in einem Abstand zu diesen angeordnet sind. Durch Verstellen der Trägerstangen 29 in den Gewinden 30 wird ein bestimmter Abstand zwischen den Erregerspulen 28 und den Polplatten 31 eingestellt.

Aufgrund einer Druckdifferenz in den Messkammern 5, 6 wird die Druckplatte 12 parallel zu der Sensorlängsachse 10 ausgelenkt und die Abstände zwischen den Erregerspulen 28 und den Polplatten 31 verändern sich. Die Abstände werden über den magnetischen Fluss durch die Spulenkerne und die Polplatten 31 mittels der Erregerspulen 28 in nicht näher dargestellter Weise gemessen und an die Auswertelektronik 3 übermittelt. Damit die Messung keine Verfälschung durch eine magnetische Remanenz erfährt, sind die Spulenkerne und die zugehörigen Polplatten 31 aus einem magnetisch leitenden, nicht magnetisierbaren Werkstoff, insbesonderen aus einem Ferritmaterial, hergestellt.

In Figur 2 ist deutlich zu erkennen, dass die Druckübertragungsbereiche 20 durch den Deckel 13 in die Messkammern 5, 6 münden. Der gesamte Raum von den Membranen 24 über die Druckübertragungsbereiche 20 bis in die Messkammern 5, 6 ist mit der Druckmittlerflüssigkeit 21 gefüllt. Dadurch können die im Bereich der Druckaufnahmebereiche 7, 8 herrschenden Drücke der Messflüssigkeit 9 über die Druckmittlerflüssigkeit 21 bis in die Messkammern 5, 6 geleitet werden und dort auf die Druckplatte 12 wirken. Die Bereiche 32 außerhalb der Übertragungsbereiche 20 und innerhalb des Gehäuses 4 des Differenzdrucksensors 1 sind von den Druckaufnahmebereichen 7, 8, von den Übertragungsbereichen 20 und von den Druckausgleichsbereichen 17 abgetrennt. Die Bereiche 32 sind mit einer neutralen Flüssigkeit oder mit einem Feststoff (z. B. Harz) gefüllt, um die Tauchfähigkeit des Differenzdrucksensors 1 sicherzustellen.

**Patentansprüche**

1. Differenzdrucksensor (1) zum Messen einer Druckdifferenz in einer Messflüssigkeit (9), mit einem in etwa rohrförmigen Gehäuse (4) und mit zwei darin angeordneten, aneinandergrenzenden Messkammern (5, 6), die jeweils über einen Druckaufnahmebereich (7, 8) des Differenzdrucksensors (1) mit der Messflüssigkeit (9) in Verbindung stehen, die jeweils nach außen durch eine zumindest teilweise flexible Wandung begrenzt und die durch eine bewegbare Druckplatte (12) voneinander getrennt sind, wobei der Differenzdrucksensor (1) Mittel (18) zum Erfassen der Auslenkung der Druckplatte (12) aufweist und wobei zwischen der Wandung des Gehäuses (4) und der Wandung der Messkammern (5, 6) eine Kompensationskammer (16) ausgebildet ist, **dadurch gekennzeichnet, dass** die Messkammern (5, 6) jeweils über einen mit einer Druckmittlerflüssigkeit (21) gefüllten Druckübertragungsbereich (20) mit einem der Druckaufnahmebereichen (7, 8) in Verbindung stehen und dass die Kompensationskammer (16) des Differenzdrucksensors (1) in etwa mittig zwischen den beiden Druckaufnahmebereichen (7, 8) über einen Druckausgleichsbereich (17) mit der Messflüssigkeit (9) in Verbindung steht.

2. Differenzdrucksensor (1) zum Messen einer Druckdifferenz in einer Messflüssigkeit (9), mit einem in etwa rohrförmigen Gehäuse (4) und mit zwei darin angeordneten, aneinandergrenzenden Messkammern (5, 6), die jeweils über einen Druckaufnahmebereich (7, 8) des Differenzdrucksensors (1) mit der Messflüssigkeit (9) in Verbindung stehen, die jeweils nach außen durch eine zumindest teilweise flexible Wandung begrenzt und die durch eine bewegbare Druckplatte (12) voneinander getrennt sind, wobei der Differenzdrucksensor (1) Mittel (18) zum Erfassen der Auslenkung der Druckplatte (12) aufweist und wobei zwischen der Wandung des Gehäuses (4) und der Wandung der Messkammern (5, 6) eine Kompensationskammer (16) ausgebildet ist, **dadurch gekennzeichnet, dass** die Messkammern (5, 6) jeweils über einen mit einer Druckmittlerflüssigkeit (21) gefüllten Druckübertragungsbereich (20) mit einem der Druckaufnahmebereichen (7, 8) in Verbindung stehen und dass in der Kompensationskammer (16) des Differenzdrucksensors (1) ein Vakuum ausgebildet ist.

3.  Differenzdrucksensor (1), insbesondere nach Anspruch 1 oder 2, **dadurch gekennzeichnet, dass** die flexiblen Wandungen der Messkammern (5, 6) als im wesentlichen rohrförmige Faltenbalge (11) ausgebildet sind, deren erste Enden jeweils an einem Deckel (13) des Gehäuses (4) des Differenzdrucksensors (1) und deren zweite Enden an der Druckplatte (12) befestigt sind, wobei die Faltenbalge (11) unter Vorspannung montiert sind, so dass sie in jeder Position der Druckplatte (12) unter Druckspannung stehen.

4.  Differenzdrucksensor (1) nach einem der Ansprüche 1 bis 3, **dadurch gekennzeichnet, dass** in den Druckaufnahmebereichen (7, 8) jeweils mindestens eine flexible Membran (22, 24) ausgebildet ist, die die Druckmittlerflüssigkeit (21) von der Messflüssigkeit (9) trennt.

5.  Differenzdrucksensor (1) nach einem der Ansprüche 1 bis 4, **dadurch gekennzeichnet, dass** in dem Druckausgleichsbereich (17) mindestens eine flexible Membran (23, 25) ausgebildet ist, die den Inhalt der Kompensationskammer (16) von der Messflüssigkeit (9) trennt.

6.  Differenzdrucksensor (1) nach Anspruch 4 oder 5, **dadurch gekennzeichnet, dass** die Membranen (22, 23) zumindest auf der der Messflüssigkeit (9) zugewandten Membranfläche mit Fluorpolymer beschichtet sind.

7.  Differenzdrucksensor (1) nach Anspruch 6, **dadurch gekennzeichnet, dass** die Membranen (22, 23) zumindest auf der der Messflüssigkeit (9) zugewandten Membranfläche mit Polytetrafluoräthylen beschichtet sind.

8.  Differenzdrucksensor (1) nach Anspruch 4 oder 5, **dadurch gekennzeichnet, dass** die Membranen (22, 23) aus Fluorelastomeren hergestellt sind.

9.  Differenzdrucksensor (1) nach einem der Ansprüche 4 bis 8, **dadurch gekennzeichnet, dass** in den Druckaufnahmebereichen (7, 8) bzw. in dem Druckausgleichsbereich (17) jeweils zwei flexible Membrane (22, 24; 23, 25) hintereinander angeordnet sind, die eine mit einer Barriereflüssigkeit gefüllte Barrierekammer (26) begrenzen.

10. Differenzdrucksensor (1) nach Anspruch 1 oder 2, **dadurch gekennzeichnet, dass** die Druckmittlerflüssigkeit (21) ein basisches Verhalten aufweist.

11. Differenzdrucksensor (1) nach Anspruch 9, **dadurch gekennzeichnet, dass** die Barriereflüssigkeit ein basisches Verhalten aufweist.

12. Differenzdrucksensor (1) nach Anspruch 10 oder 11, **dadurch gekennzeichnet, dass** die Druckmittlerflüssigkeit (21) und/oder die Barriereflüssigkeit ein Gemisch aus Wasser und Kaliumhydroxid oder aus Wasser und Natriumhydroxid umfasst, mit einem Anteil an Kaliumhydroxid bzw. an Natriumhydroxid von mindestens 0,1 mol/liter.

13. Messeinrichtung zum Messen der Dichte einer Messflüssigkeit (9), mit einem Differenzdrucksensor (1) und einer mit diesem verbundenen Auswerteelektronik (3), **dadurch gekennzeichnet, dass** der Differenzdrucksensor (1) nach einem der Ansprüche 1 bis 12 ausgebildet ist und Mittel zum Übermitteln der Auslenkung der Druckplatte (12) an die Auswerteelektronik (3) aufweist, die aus der Auslenkung der Druckplatte (12) die entsprechende Dichte der Messflüssigkeit (9) ermittelt.

14. Messeinrichtung nach Anspruch 13, **dadurch gekennzeichnet, dass** der Differenzdrucksensor (1) Mittel zum Erfassen der Temperatur der Messflüssigkeit (9) und Mittel zum Übermitteln der Temperatur an die Auswerteelektronik (3) aufweist, wo die Temperatur bei der Ermittlung der Dichte der Messflüssigkeit (9) Berücksichtigung findet.

**Claims**

1. A differential pressure sensor (1) for measuring a pressure differential in a measuring fluid (9), having a roughly tube-shaped housing (4) and having two measuring chambers (5, 6), arranged therein and adjoining each other, which in each case are connected to the measuring fluid (9) via a pressure receiving area (7, 8) of the differential pressure sensor (1), and which in each case are bordered to the outside by an at least partially flexible wall and are separated from each other by a movable pressure plate (12), whereby the differential pressure sensor (1) has a means (18) for detecting the lateral deflection of the pressure plate (12), and whereby a compensation chamber (16) is formed between the wall of the housing (4) and the wall of the measuring chambers (5, 6), wherein the measuring chambers (5, 6) are each connected to one of the pressure receiving areas (7, 8) via a pressure transmitting area (20) that is filled with a pressure mediating fluid (21), and the compensation chamber (16) of the differential pressure sensor (1) is connected to the measuring fluid (9) via a pressure balancing area (17) situated roughly in the center between the two pressure receiving areas (7, 8).

2. A differential pressure sensor (1) for measuring a pressure differential in a measuring fluid (9), having a roughly tube-shaped housing (4) and having two measuring chambers (5, 6), arranged therein and adjoining each other, which in each case are connected to the measuring fluid (9) via a pressure receiving area (7, 8) of the differential pressure sensor (1), and which in each case are bordered to the outside by an at least partially flexible wall and are separated from each other by a movable pressure plate (12), whereby the differential pressure sensor (1) has a means (18) for detecting the lateral deflection of the pressure plate (12), and whereby a compensation chamber (16) is formed between the wall of the housing (4) and the wall of the measuring chambers (5, 6), wherein the measuring chambers (5, 6) are each connected to one of the pressure receiving areas (7, 8) via a pressure transmitting area (20) that is filled with a pressure mediating fluid (21), and a vacuum is formed in the compensation chamber (16) of the differential pressure sensor (1).

3. The differential pressure sensor (1), in particular as recited in Claims 1 or 2, wherein the flexible walls of the measuring chambers (5, 6) are configured essentially as tube-shaped bellows (11), whose first ends are attached to a cover (13) of the housing (4) of the differential pressure sensor (1) and whose second ends are attached to the pressure plate (12), whereby the bellows (11) is mounted with pre-stressing, so that it is under compressive stress at every position of the pressure plate (12).

4. The differential pressure sensor (1) as recited in any of Claims 1 to 3, wherein at least one flexible diaphragm (22, 24), separating the pressure mediating fluid (21) from the measuring fluid (9), is arranged in the pressure receiving areas (7, 8).

5. The pressure differential sensor (1) as recited in any of Claims 1 to 4, wherein at least one flexible diaphragm (23, 25), separating the contents of the compensation chamber (16) from the measuring fluid (9), is arranged in the pressure balancing area (17).

6. The differential pressure sensor (1) as recited in any of Claims 4 or 5, wherein the diaphragm (22, 23) is coated with a fluoropolymer at least on the diaphragm surface that faces the measuring fluid (9).

7. The differential pressure sensor (1) as recited in Claim 6, wherein the diaphragm (22, 23) is coated with polytetrafluoroethylene at least on the diaphragm surface that faces the measuring fluid (9).

8. The differential pressure sensor (1) as recited in Claim 4 or 5, wherein the diaphragms (22, 23) are made of fluoroelastomers.

9. The differential pressure sensor (1) as recited in any of Claims 4 to 8, wherein, in each case, two flexible diaphragms (22, 24; 23, 25), bordering a barrier chamber (26) that is filled with a barrier fluid, are arranged one behind the other in the pressure receiving areas (7, 8) and in the pressure balancing area (17).

10. The differential pressure sensor (1) as recited in Claim 1 or 2, wherein the pressure mediating fluid (21) has the behavior of an alkaline.

11. The differential pressure sensor (1) as recited in Claim 9, wherein the barrier fluid has the behavior of an alkaline.

12. The differential pressure sensor (1) as recited in Claim 10 or 11, wherein the pressure mediating fluid (21) and/or the barrier fluid includes a mixture of water and potassium hydroxide, or of water and sodium hydroxide, having a proportion of potassium hydroxide, or sodium hydroxide, of at least 0.1 mol/l.

13. A measuring device for measuring the density of a measuring fluid (9), having a differential pressure sensor (1) and an evaluation electronics (3) that is connected with the former, wherein the differential pressure sensor (1) is configured as recited in any of Claims 1 to 12, and has a means for transmitting the lateral deflection of the pressure plate (12) to the evaluation electronics (3), which measures the corresponding density of the measuring fluid (9) from the lateral deflection of the pressure plate (12).

14. The measuring device as recited in Claim 13, wherein the differential pressure sensor (1) has a means for detecting the temperature of the measuring fluid (9) and a means for transmitting the temperature to the evaluation electronics (3), where the temperature is taken into account in determining the density of the measuring fluid (9).

**Revendications**

1. Capteur de pression différentielle (1) pour mesurer une différence de pression dans un liquide de mesure (9), comprenant un boîtier (4) de forme à peu près tubulaire et deux chambres de mesure (5, 6) disposées à l'intérieur et contiguës, qui sont en liaison respectivement par une zone d'absorption de pression (7, 8) du capteur de pression différentielle (1) au liquide de mesure (9), qui sont délimitées respectivement vers l'extérieur par une paroi au moins partiellement flexible et qui sont séparées l'une de l'autre par une plaque de pression (12) mobile, le capteur de pression différentielle (1) présentant des moyens (18) pour la détection de la déviation de la plaque de pression (12) et une chambre de compensation (16) étant réalisée entre la paroi du boîtier (4) et la paroi des chambres de mesure (5, 6), **caractérisé en ce que** les chambres de mesure (5, 6) sont en liaison respectivement par une zone de transmission de pression (20) remplie d'un liquide transmetteur de pression (21) à l'une des zones d'absorption de pression (7, 8) et **en ce que** la chambre de compensation (16) du capteur de pression différentielle (1) est en liaison à peu près au centre entre les deux zones d'absorption de pression (7, 8) au moyen d'une zone de compensation de pression (17) avec le liquide de mesure (9).

2. Capteur de pression différentielle (1) pour mesurer une différence de pression dans un liquide de mesure (9), comprenant un boîtier (4) de forme à peu près tubulaire et deux chambres de mesure (5, 6) disposées à l'intérieur et contiguës, qui sont en liaison respectivement par une zone d'absorption de pression (7, 8) du capteur de pression différentielle (1) avec le liquide de mesure (9), qui sont délimitées respectivement vers l'extérieur par une paroi au moins partiellement flexible et sont séparées l'une de l'autre par une plaque de pression (12) mobile, le capteur de pression différentielle (1) présentant des moyens (18) pour la détection de la déviation de la plaque de pression (12), et une chambre de compensation (16) étant réalisée entre la paroi du boîtier (4) et la paroi des chambres de mesure (5, 6), **caractérisé en ce que** les chambres de mesure (5, 6) sont en liaison respectivement par une zone de transmission de pression (20) remplie d'un liquide transmetteur de pression (21) avec l'une des zones d'absorption de pression (7, 8) et **en ce qu'**un vide est réalisé dans la chambre de compensation (16) du capteur de pression différentielle (1).

3. Capteur de pression différentielle (1), en particulier selon la revendication 1 ou 2, **caractérisé en ce que** les parois flexibles des chambres de mesure (5, 6) sont conçues comme des soufflets (11) sensiblement tubulaires, dont les premières extrémités sont fixées respectivement sur un couvercle (13) du boîtier (4) du capteur de pression différentielle (1) et dont les secondes extrémités sont fixées sur la plaque de pression (12), les soufflets (11) étant montés sous pré-tension, de sorte qu'ils sont sous tension de pression dans chaque position de la plaque de pression (12).

4. Capteur de pression différentielle (1) selon l'une quelconque des revendications 1 à 3, **caractérisé en ce que** dans chacune des zones d'absorption de pression (7, 8) est réalisée au moins une membrane (22, 24) flexible qui sépare le liquide transmetteur de pression (21) du liquide de mesure (9).

5. Capteur de pression différentielle (1) selon l'une quelconque des revendications 1 à 4, **caractérisé en ce que** dans la zone de compensation de pression (17) est réalisée au moins une membrane (23, 25) flexible qui sépare le contenu de la chambre de compensation (16) du liquide de mesure (9).

6. Capteur de pression différentielle (1) selon la revendication 4 ou 5, **caractérisé en ce que** les membranes (22, 23) sont recouvertes de polymère fluoré au moins sur la surface de membrane tournée vers le liquide de mesure (9).

**7.** Capteur de pression différentielle (1) selon la revendication 6, **caractérisé en ce que** les membranes (22, 23) sont recouvertes de polytétrafluoréthylène au moins sur la surface de membrane tournée vers le liquide de mesure (9).

**8.** Capteur de pression différentielle (1) selon la revendication 4 ou 5, **caractérisé en ce que** les membranes (22, 23) sont fabriquées à base d'élastomères fluorés.

**9.** Capteur de pression différentielle (1) selon l'une quelconque des revendications 4 à 8, **caractérisé en ce que** dans chacune des zones d'absorption de pression (7, 8) ou dans la zone de compensation de pression (17) sont disposées deux membranes (22, 24 ; 23, 25) flexibles l'une derrière l'autre, qui délimitent une chambre de barrière (26) remplie d'un liquide de barrière.

**10.** Capteur de pression différentielle (1) selon la revendication 1 ou 2, **caractérisé en ce que** le liquide transmetteur de pression (21) présente un comportement basique.

**11.** Capteur de pression différentielle (1) selon la revendication 9, **caractérisé en ce que** le liquide de barrière présente un comportement basique.

**12.** Capteur de pression différentielle (1) selon la revendication 10 ou 11, **caractérisé en ce que** le liquide transmetteur de pression (21) et/ou le liquide de barrière comprend un mélange d'eau et d'hydroxyde de potassium ou d'eau et d'hydroxyde de sodium, avec une fraction d'hydroxyde de potassium ou d'hydroxyde de sodium d'au moins 0,01 mole/l

**13.** Dispositif de mesure pour mesurer la densité d'un liquide de mesure (9), comprenant un capteur de pression différentielle (1) et une électronique d'analyse (3) reliée à ce capteur, **caractérisé en ce que** le capteur de pression différentielle (1) est réalisé selon l'une quelconque des revendications 1 à 12 et présente des moyens pour transmettre la déviation de la plaque de pression (12) à l'électronique d'analyse (3), qui détermine à partir de la déviation de la plaque de pression (12) la densité correspondante du liquide de mesure (9).

**14.** Dispositif de mesure selon la revendication 13, **caractérisé en ce que** le capteur de pression différentielle (1) présente des moyens pour l'enregistrement de la température du liquide de mesure (9) et des moyens pour la transmission de la température à l'électronique d'analyse (3), la température étant prise en compte pour calculer la densité du liquide de mesure (9).

Fig.1

Fig. 2